Europäisches Patentamt

European Patent Office

Office européen des brevets

(19)

(11) Publication number: **0 485 621 A1**

## EUROPEAN PATENT APPLICATION
## published in accordance with Art. 158(3) EPC

(12)

(21) Application number: **91909797.2**

(22) Date of filing: **22.05.91**

(86) International application number:
**PCT/JP91/00679**

(87) International publication number:
**WO 91/18403 (28.11.91 91/27)**

(51) Int. Cl.⁵: **H01F 1/34**, C04B 35/28

(30) Priority: **22.05.90 JP 132231/90**

(43) Date of publication of application:
**20.05.92 Bulletin 92/21**

(84) Designated Contracting States:
**DE GB NL**

(71) Applicant: **MURATA MANUFACTURING CO., LTD.**
**26-10, Tenjin 2-chome**
**Nagaokakyo-shi, Kyoto 617(JP)**

(72) Inventor: **KATO, Chiharu, 7-9, Takagaki-cho**
**Takatsuki-shi**
**Osaa 569(JP)**
Inventor: **NAKA, Takaaki, 1-9-9, Kaiden**
**Nagaokakyo-shi**
**Kyoto 617(JP)**
Inventor: **TOMONO, Kunisaburo, 2-9-7-404,**
**Oharano Nishi-sakaidani-cho Nishikyo-ku**
**Kyoto-shi**
**Kyoto 610-11(JP)**

(74) Representative: **von Kreisler, Alek, Dipl.-Chem. et al**
**Patentanwälte Von Kreisler-Selting-Werner,**
**Deichmannhaus am Hauptbahnhof**
**W-5000 Köln 1(DE)**

(54) **CERAMIC MATERIAL FOR USE IN HIGH-FREQUENCY FIELD.**

(57) A ceramic material for use in a high-frequency field, which is composed of nickel oxide, cobalt oxide and iron oxide and has a composition of $(NiO)_x(CoO)_y(Fe_2O_3)_z$, wherein x, y and z are mole fractions of respective components and $0.04 < y/(x+y) < 0.30$, $0.4 < x < 0.6$, $x+y+z = 1.00$.

EP 0 485 621 A1

EP 0 485 621 A1

[TECHNICAL FIELD]

The present invention relates to a magnetic material for high frequencies, especially, a ferrite material used in circuit elements operated at high frequencies of not less than 200 MHz, such as antennas, L-C resonance circuits, inductance elements and transformers.

[BACKGROUND ART]

As a ferrite material for high frequencies, so far there have been used those such as Ni-Zn ferrites. The use of Ni-Zn ferrites with a permeability of more than 1 makes it possible to achieve miniaturization of elements, but it involves such a problem that Q decreases greatly as the frequency increases. The limiting frequency of elements employing any Ni-Zn ferrite, i.e., an upper limit of frequencies at which the Q is maintained to a value of not less than 50, can be improved by reducing a Zn content of the ferrite. However, even if the Zn content is reduced to zero to produce Ni ferrites, the limiting frequency of Ni ferrites is less than 200 MHz, thus making it impossible to use such Ni ferrites at frequencies of not less than 200 MHz. To this end, air-cored coils have been used at higher frequencies than 200 MHz.

On the other hand, if the magnetic material is intended to be used as an inductance L at relatively low frequencies, it is sufficient to design the elements as a concentrated constant type which requires a consideration of the permeability only. However, at high frequencies of not less than 200 MHz, it is required to design the elements as a distributed constant type by considering not only the permeability but dielectric constant. Thus, if any magnetic material is to be used at high frequencies of not less than 200 MHz, it is important for the magnetic material to be small in the temperature coefficient of dielectric constant and that of permeability to stabilize the thermal characteristics of elements to be produced. In particular, if the magnetic material is used for antennas, it is absolutely necessary to minimize the temperature coefficient of the dielectric constant and that of the permeability.

As disclosed in JP-B, 57-42586, it has been proposed to improve the temperature characteristics of the permeability by addition of the third component to the magnetic material. However, no investigation has been reported to improve the temperature characteristics of the dielectric constant of the magnetic materials for high frequencies.

Further, if air-cored coils are used in the place of the Ni-ferrite of which the Q value decreases at high frequencies, the size becomes large as the effective initial permeability is 1. In addition, it is difficult to obtain high Q values at high frequencies since the Q value is greatly decreased by the electric resistance of a winding because of a small inductance of the air-cored coil.

[Disclosure of Invention]

It is therefore a main object of the present invention to provide a magnetic material for high frequencies having a high Q value at high frequencies, an initial permeability greater than 1 and a small temperature coefficient of dielectric constant, as well as to overcome the problems inherent to the magnetic materials for high frequencies of the prior art.

According to the present invention, the above and other objects are achieved by incorporating a very small amount of cobalt into a Ni ferrite, and by determining mole fractions of the respective components, $x$, $y$ and $z$, in the general formula: $(NiO)_x(CoO)_y(Fe_2O_3)_z$, in such a manner that they satisfy the conditions of $0.04 < y/(x + y) < 0.30$, $0.4 < x < 0.6$, and $x + y + z = 1.00$.

According to the present invention, there is provided a magnetic material for high frequencies, consisting essentially of nickel oxides, cobalt oxides and iron oxides, characterized in that the material has a composition expressed by the general formula:

$$(NiO)_x(CoO)_y(Fe_2O_3)_z,$$

wherein $x$, $y$ and $z$ are mole fractions of the respective components, $0.04 < y/(x + y) < 0.30$, $0.4 < x < 0.6$, and $x + y + z = 1.00$.

The magnetic material according to the present invention has the permeability of more than 1, a very high limiting frequency, good temperature characteristics of both the permeability and dielectric constant, and stable characteristics. Using this ferrite material as a magnetic material, it is possible to produce elements which are very compact as compared with the air-cored coils, have a very high Q value, good temperature characteristics, and can be used at high frequencies of not less than 200 MHz.

2

The ratios of components of the magnetic material for high frequencies of the present invention have been limited to the above ranges for the following reasons.

If $y/(x + y)$ is not more than 0.04, the magnetic material with a high initial permeability can be obtained, but the limiting frequency is low, thus making it impossible to use it at high frequencies of not less than 200 MHz. The limiting frequency and impedance of the magnetic material can be improved by incorporating a large amount of Co into the magnetic material. At the same time, the rate of temperature change of dielectric constant can be lowered decreased to not more than 1000 ppm/°C. However, the initial permeability of the magnetic material decreases with increase of the Co content and becomes less than 1.5 when $y/(x + y)$ exceeds 0.30. Thus, the upper value of $y/(x + y)$ has been limited to not more than 0.30.

On the other hand, if the mole fraction of $Fe_2O_3$, i.e., $z$, is not more than 0.4 or not less than 0.6, foreign crystal phases occur because of deviation from the stoichiometric composition of the spinel structure so that the dielectric constant and permeability become unstable, though the limiting frequency is increased by addition of Co. Further, if $z$ is not less than 0.6, the magnetic permeability after instantaneous application of a high magnetic field becomes lowered. Thus, $z$ has been limited to a value in the range: $0.4 < z < 0.6$.

It is added that the temperature characteristics of the permeability is also improved near the composition with $y/(x + y) = 0.03$ and $z = 0.49$ as the second peak of permeability, so-called SMC, occurs around room temperatures.

The present invention will be explained in detail by way of examples hereinafter.

[Best Mode for Carrying Out the Invention]

Example

As raw materials, NiO, CoO and $Fe_2O_3$ all of which have the purity of not less than 99% were used. These materials were weighed and mixed so as to produce ferrites having compositional ratios shown in Table 1. Each resultant mixture was put into a ball mill together with water, milled for 4 hours, dehydrated and dried. Then, the mixture was calcined at 900 °C for 2 hours with an electric furnace, milled together with water for 24 hours by the ball-mill, and then granulated by addition of a binder. The resultant powder, after being dehydrated and dried, was compacted at a pressure of 1000 Kg/cm$^2$ with a press. The compacts were fired at 1200 °C for 2 hours with the electric furnace.

For each specimen, measurements were made on the initial permeability ($\mu$), limiting frequency ($f_{max}$), dielectric constant ($\epsilon$), temperature change rate of dielectric constant over a range of -25 to 10 °C and that of 20 to 80 °C, and stability of the characteristics. Results obtained are shown in Table 1.

In Table 1, the specimens with an asterisk (*) are those beyond the scope of the present invention, while other specimens are those falling within the scope of the present invention. The limiting frequency is the upper limit of a frequency at which the Q of the material is maintained to a value of not less than 50, as mentioned above. The temperature change rate of the dielectric constant ($\epsilon$) is given by equation: $\Delta\epsilon/\epsilon\Delta T$ where $\Delta\epsilon$ is a difference between two values of the dielectric constant measured at different temperatures, $\Delta T$ is a difference between two measuring temperatures.

As will be clearly understood from Table 1, the magnetic material according to the present invention has an initial permeability of more than 1.5, the limiting frequency ranging from 400 to 650 MHz, a small temperature change rate of dielectric constant, and stable characteristics. Using the ferrite material as a magnetic material, it is possible to produce elements which are compact as compared with the air-cored coils, very high in the Q, and excellent in the temperature characteristics, and which are usable at high frequencies of not less than than 200 MHz.

TABLE 1

| No. | Composition | | Physical properties | | | | |
|-----|-------------|---|---------------------|---|---|---|---|
| | $y/(x+y)$ | $z$ | $\mu$ | $f_{max}$ | $\epsilon$ | TC of $\epsilon$ -25-20°C 20-80°C | Stability of prop. |
| | | | (100MHz) | (MHz) | (1KHz) | | |
| A1* | 0.0 | 0.40 | 10.30 | <40 | 11.74 | 1215 3074 | Unstable |
| A2* | 0.04 | 0.40 | 6.99 | 120 | 11.23 | 145 587 | Unstable |
| A3* | 0.07 | 0.40 | 3.01 | 390 | 11.45 | 385 784 | Unstable |
| A4* | 0.10 | 0.40 | 2.110 | 540 | 11.96 | 451 621 | Unstable |
| A5* | 0.20 | 0.40 | 1.505 | 650 | 11.24 | 157 663 | Unstable |
| A6* | 0.30 | 0.40 | 1.476 | 730 | 11.10 | 411 552 | Unstable |
| B1* | 0.0 | 0.45 | 11.45 | <40 | 11.51 | 1062 3076 | Stable |
| B2* | 0.04 | 0.45 | 7.45 | 130 | 11.19 | 195 601 | Stable |
| B3 | 0.07 | 0.45 | 3.32 | 410 | 11.34 | 341 969 | Stable |
| B4 | 0.10 | 0.45 | 2.453 | 530 | 11.41 | 588 784 | Stable |
| B5 | 0.20 | 0.45 | 1.544 | 650 | 11.68 | 147 257 | Stable |
| B6* | 0.30 | 0.45 | 1.488 | 740 | 11.21 | 364 851 | Stable |
| C1* | 0.0 | 0.47 | 13.95 | <40 | 11.49 | 1154 2881 | Stable |
| C2* | 0.04 | 0.47 | 9.08 | 140 | 11.18 | 174 579 | Stable |
| C3 | 0.07 | 0.47 | 3.63 | 420 | 11.19 | 331 963 | Stable |

TABLE 1 (contd.)

| No. | Composition | | Physical properties | | | | Stability of prop. |
|---|---|---|---|---|---|---|---|
| | y/(x+y) | z | μ | f$_{max}$ | ε | TC of ε -25–20°C 20–80°C | |
| | | | (100MHz) | (MHz) | (1KHz) | | |
| C4 | 0.10 | 0.47 | 2.663 | 510 | 11.75 | 498 851 | Stable |
| C5 | 0.20 | 0.47 | 1.799 | 640 | 11.84 | 165 347 | Stable |
| C6* | 0.30 | 0.47 | 1.496 | 730 | 11.95 | 655 771 | Stable |
| D1* | 0.0 | 0.50 | 17.75 | <40 | 11.83 | 1085 3025 | Stable |
| D2* | 0.04 | 0.50 | 11.42 | 140 | 11.19 | 150 660 | Stable |
| D3 | 0.07 | 0.50 | 4.02 | 350 | 11.69 | 307 879 | Stable |
| D4 | 0.10 | 0.50 | 2.889 | 500 | 11.66 | 164 312 | Stable |
| D5 | 0.20 | 0.50 | 1.834 | 650 | 11.51 | 335 487 | Stable |
| D6* | 0.30 | 0.50 | 1.498 | 740 | 11.86 | 410 660 | Stable |
| E1* | 0.0 | 0.60 | 16.57 | <40 | 11.24 | 1342 2945 | Unstable |
| E2* | 0.04 | 0.60 | 10.51 | 110 | 11.27 | 236 497 | Unstable |
| E3* | 0.07 | 0.60 | 3.86 | 330 | 11.39 | 349 457 | Unstable |
| E4* | 0.10 | 0.60 | 2.736 | 480 | 11.19 | 225 412 | Unstable |
| E5* | 0.20 | 0.60 | 1.796 | 610 | 11.65 | 416 897 | Unstable |
| E6* | 0.30 | 0.60 | 1.490 | 740 | 11.74 | 201 408 | Unstable |

**Claims**

1. A magnetic material for high frequencies consisting essentially of nickel oxides, cobalt oxides and iron oxides, characterized in that said material has a composition expressed by the general formula:

$(NiO)_x(CoO)_y(Fe_2O_3)_z,$

wherein x, y and z are mole fractions of the respective components, $0.04 < y/(x + y) < 0.30$, $0.4 < x < 0.6$, and $x + y + z = 1.00$.

# INTERNATIONAL SEARCH REPORT

International Application No PCT/JP91/00679

## I. CLASSIFICATION OF SUBJECT MATTER (if several classification symbols apply, indicate all) ^

According to International Patent Classification (IPC) or to both National Classification and IPC

Int. Cl$^5$ H01F1/34, C04B35/28

## II. FIELDS SEARCHED

Minimum Documentation Searched :

| Classification System : | Classification Symbols |
|---|---|
| IPC | H01F1/34, C04B35/28, C01G49/00 |

Documentation Searched other than Minimum Documentation
to the Extent that such Documents are Included in the Fields Searched &

| | |
|---|---|
| Jitsuyo Shinan Koho | 1950 - 1991 |
| Kokai Jitsuyo Shinan Koho | 1971 - 1991 |

## III. DOCUMENTS CONSIDERED TO BE RELEVANT ⁹

| Category * \ | Citation of Document, ¹¹ with indication, where appropriate, of the relevant passages ¹² | Relevant to Claim No. ¹³ |
|---|---|---|
| X | JP, B1, 41-9628 (Hitachi, Ltd.), May 23, 1966 (23. 05. 66), Lines 6 to 8, column 6 (Family: none) | 1 |
| A | JP, B1, 41-547 (Sony Corp.), January 20, 1966 (20. 01. 66), Lines 15 to 18, column 2 (Family: none) | 1 |
| A | JP, B1, 34-137 (Kinzoku Zairyo Kenkyusho-cho), January 23, 1959 (23. 01. 59), Lines 25 to 27, column 1 (Family: none) | 1 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 19, 1991 (19. 07. 91) | August 12, 1991 (12. 08. 91) |

| International Searching Authority | Signature of Authorized Officer |
|---|---|
| Japanese Patent Office | |

Form PCT ISA 210 (second sheet) (January 1985)